(19) Europäisches Patentamt
European Patent Office
Office européen des brevets

(11) **EP 1 827 005 A1**

(12) **EUROPEAN PATENT APPLICATION**
published in accordance with Art. 158(3) EPC

(43) Date of publication:
**29.08.2007 Bulletin 2007/35**

(51) Int Cl.:
**H04N 1/387** (2006.01)

(21) Application number: **04807171.6**

(22) Date of filing: **16.12.2004**

(86) International application number:
**PCT/JP2004/018812**

(87) International publication number:
**WO 2006/064563 (22.06.2006 Gazette 2006/25)**

(84) Designated Contracting States:
**DE FR GB**

(71) Applicant: **MITSUBISHI ELECTRIC CORPORATION**
**Chiyoda-ku**
**Tokyo 100-8310 (JP)**

(72) Inventors:
• **ISHIZUKA, Hirokazu,**
**c/o Mitsubishi Denki K. K.**
**Tokyo 100-8310 (JP)**

• **NISHIOKA, Tsuyoshi,**
**c/o Mitsubishi Denki K. K.**
**Tokyo 100-8310 (JP)**

• **HASEGAWA, Toshio,**
**c/o Mitsubishi Denki K. K.**
**Tokyo 100-8310 (JP)**

• **TSURUMARU, Toyohiro,**
**c/o Mitsubishi Denki K. K.**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **DATA CONVERTER, DATA CONVERTING METHOD, AND DATA CONVERTING SYSTEM**

(57) An objective, when extracting from data such as an image, an audio, and a moving picture, is to extract the information from raw data that has not been processed for extraction, extract many different items of information for different purposes from the same data, and increase the amount of information that can be extracted. In a mobile phone with camera 101, a photographing section 204 photographs an image. A data analyzing section 207 analyses the image based on analysis definition information, which is stored in a definition storing section 201, to define how much data in which part to be read in what order when extracting information from the image. A data converting section 208 extracts information from the image based on code definition information, which is stored in the definition storing section 201, to define a method of computing data taken out according to the analysis definition information. An output section 209 displays information on a screen, and transmits information to a server apparatus 105.

Fig. 1

103: DEFINITION FILE
101: MOBILE PHONE WITH CAMERA (DATA CONVERSION APPARATUS)
102: IMAGE
104: INFORMATION
105: SERVER APPARATUS

EP 1 827 005 A1

## Description

Technical Field

The present invention relates to a data conversion apparatus, a data conversion method, and a data conversion system.

Background Art

Existing information extraction technologies, such as digital watermarking, allow data of a very small noise level to be hidden in an image for embedding information in or taking it out of the image without heavily damaging it. A patent document 1 discloses a system for taking information needed out of a server by extracting the characteristic of an image itself by means of histogram distribution or frequency conversion of the image itself and using the characteristic as the one and only key of the image even in the case of an image containing no other data such as digital watermark data. When the image is a barcode, a digital watermark, or the like, the system reads an ID (IDentification) by means of a corresponding system, and uses the ID as a key to process the same.
Patent Document: JP2004-179783

Disclosure of the Invention

Problems to be Solved by the Invention

Barcodes may not be easy for humans to read, but are far more readable than written text, etc. for machines, and therefore have been used as an accurate method for automatic recognition with a low misidentification rate. (It is said that machines have a misidentification rate of one in ten thousand letters with printed text whereas one in three million letters with barcodes.) Normally, a barcode can be read by linear scanning with the aid of laser beams and reflection thereof. The same is true with two-dimensional barcodes. With a two-dimensional barcode, information is read in two different directions, vertically and horizontally, which allows for an increase in the amount of information that can be embedded. There has been widespread use of a type of two-dimensional barcodes that can be read by a built-in camera in a mobile phone. Barcodes are read by planar reading rather than linear reading when read by using a camera function equipped in a mobile phone.

A one-dimensional barcode has a pattern of black-and-white stripes, and a two-dimensional barcode has a pattern of black-and-white dots. These geometric patterns are both dry and tasteless for humans. (The two-dimensional barcode is sometimes called a "two-dimensional symbol" for the reason that a barcode is not suitable for the naming of a pattern of dots. For the purpose of easy visualization, however, the phrase of the two-dimensional barcode will still be used hereinafter.) It is not easy therefore for humans to distinguish between multiple barcodes.

The two-dimensional barcode can contain a larger amount of information to be taken out than the one-dimensional barcode. The amount is ten to a hundred times as large (e.g., one kilobyte) as that of the one-dimensional barcode. Still, however, there is a limit to the amount of information that can be extracted.

When information is extracted from an image with a digital watermark instead of a barcode, the image needs to be preprocessed (i.e., a digital watermark has to be embedded in advance).

In the case of the patent document 1, the amount of the characteristic of an image itself is used as a key to access a server to obtain information from the server. Thus, according to the existing method of extracting information, it is impossible to obtain information needed directly from an image. Meaningful data can be obtained only by accessing a server.

The present invention is intended to extract information from raw data that has not been processed for extraction, to extract many different items of information from the same data for different purposes, etc., and to increase the amount of information that can be extracted, when information is extracted from data such as an image, an audio, and a moving picture.

Means to Solve the Problems)

A data conversion apparatus according to the present invention may be characterized by including:

an analysis definition acquiring section that may acquire analysis definition information that may, for an analysis of data, define an analysis range of the data subject to the analysis and an analysis method to be used for the analysis;
a code definition acquiring section that may acquire code definition information that may define an encoding method to be used for encoding a result of the analysis;
a data acquiring section that may acquire first data;
a data analyzing section that may analyze a portion of the first data acquired by the data acquiring section by using the analysis method that may be defined in the analysis definition information acquired by the analysis definition acquiring section, the portion being indicated by the analysis range that may be defined in the analysis definition information acquired by the analysis definition acquiring section; and
a data converting section that may encode a result of the data analyzing section analyzing the portion of the first data by using the encoding method that may be defined in the code definition information acquired by the code definition acquiring section, thereby converting the result to second data.

The data acquiring section may be characterized by acquiring an image as the first data.

The analysis definition information may be characterized by defining coordinates where multiple points lie as the analysis range.

The data analyzing section may be characterized by analyzing the multiple points in the image acquired by the data acquiring section by using the analysis method that may be defined in the analysis definition information acquired by the analysis definition acquiring section, the multiple points being indicated by the coordinates that may be defined in the analysis definition information.

The data acquiring section may be characterized by acquiring a moving picture as the image.

The analysis definition information may be characterized by defining coordinates where multiple points lie and multiple time points as the analysis range.

The data analyzing section may be characterized by analyzing the multiple points at the multiple time points in the moving picture acquired by the data acquiring section by using the analysis method that may be defined in the analysis definition information acquired by the analysis definition acquiring section, the multiple points being indicated by the coordinates and the multiple time points being defined in the analysis definition information.

The analysis definition information may be characterized by defining a method of measuring luminance as the analysis method.

The data analyzing section may be characterized by measuring the luminance of the multiple points in the image acquired by the data acquiring section, the multiple points being indicated by the coordinates that may be defined in the analysis definition information.

The analysis definition information may be characterized by defining a method of measuring color as the analysis method.

The data analyzing section may be characterized by measuring the color of the multiple points in the image acquired by the data acquiring section, the multiple points being indicated by the coordinates that may be defined in the analysis definition information.

The analysis definition information may be characterized by defining a method of measuring at least one of an R (Red) component, a G (Green) component, and a B (Blue) component of RGB (Red-Green-Blue) components as the color.

The data analyzing section may be characterized by measuring the at least one of the R component, the G component, and the B component of the multiple points in the image acquired by the data acquiring section, the multiple points being indicated by the coordinates that may be defined in the analysis definition information.

The data acquiring section may be characterized by acquiring an audio as the first data.

The analysis definition information may be characterized by defining multiple time points as the analysis range.

The data analyzing section may be characterized by analyzing the multiple time points in the audio acquired by the data acquiring section by using the analysis method that may be defined in the analysis definition information acquired by the analysis definition acquiring section, the multiple time points being defined in the analysis definition information.

The analysis definition information may be characterized by defining a method of measuring frequency as the analysis method.

The data analyzing section may be characterized by measuring the frequency at the multiple time points in the audio acquired by the data acquiring section, the multiple time points being defined in the analysis definition information.

The data conversion apparatus may be characterized by further including a photographing section that may photograph the image.

The data acquiring section may be characterized by acquiring the image photographed by the photographing section.

The data conversion apparatus may be characterized by further including a definition storing section that may store the analysis definition information.

The analysis definition acquiring section may be characterized by acquiring the analysis definition information stored in the definition storing section.

The data conversion apparatus may be characterized by further including a definition storing section that may store the code definition information

The code definition acquiring section may be characterized by acquiring the code definition information stored in the definition storing section.

The data conversion apparatus may be characterized by further including a definition receiving section that may receive the analysis definition information.

The analysis definition acquiring section may be characterized by acquiring the analysis definition information received by the definition receiving section.

The data conversion apparatus may be characterized by further including a definition receiving section that may receive the code definition information.

The code definition acquiring section may be characterized by acquiring the code definition information received by the definition receiving section.

The data conversion apparatus may be characterized by further including a definition selecting section that may select the analysis definition information.

The analysis definition acquiring section may be characterized by acquiring the analysis definition information selected by the definition selecting section.

The data conversion apparatus may be characterized by further including a definition selecting section that may select the code definition information.

The code definition acquiring section may be characterized by acquiring the code definition information selected by the definition selecting section.

The data conversion apparatus may be characterized by further including an output section that may output the second data converted by the data converting section.

The data conversion apparatus may be characterized by further including a data storing section that may store the first data.

The data acquiring section may be characterized by acquiring the first data stored in the data storing section.

The data conversion apparatus may be characterized by further including a data receiving section that may receive the first data.

The data acquiring section may be characterized by acquiring the first data received by the data receiving section.

The data conversion apparatus may be characterized by further including a data selecting section that may select the first data.

The data acquiring section may be characterized by acquiring the first data selected by the data selecting section.

The data conversion apparatus may be characterized by further including a data adjusting section that may, for the analysis of the first data, adjust the first data acquired by the data acquiring section.

The data analyzing section may be characterized by analyzing the first data adjusted by the data adjusting section.

A data conversion method according to the present invention may be characterized by including:

acquiring analysis definition information that may, for an analysis of data, define an analysis range of the data subject to the analysis and an analysis method to be used for the analysis;
acquiring code definition information that may define an encoding method to be used for encoding a result of the analysis;
acquiring first data;
analyzing a portion of the first data by using the analysis method that may be defined in the analysis definition information, the portion being indicated by the analysis range that may be defined in the analysis definition information; and
encoding a result of the analyzing the portion of the first data by using the encoding method that may be defined in the code definition information, thereby converting the result to second data.

A data conversion system according to the present invention may be characterized by including a server apparatus that may transmit information and a data conversion apparatus that may convert first data to second data.

The server apparatus may be characterized by including:

a definition information storing section that may store analysis definition information that may, for an analysis of data, define an analysis range of the data subject to the analysis and an analysis method to be used for the analysis, and code definition information that may define an encoding method to be used for encoding a result of the analysis; and
a definition information transmitting section that may transmit the analysis definition information and the code definition information stored in the definition information storing section to the data conversion apparatus.

The data conversion apparatus may be characterized by including:

a definition receiving section that may receive the analysis definition information and the code definition information transmitted by the definition information transmitting section;
an analysis definition acquiring section that may acquire the analysis definition information received by the definition receiving section;
a code definition acquiring section that may acquire the code definition information received by the definition receiving section;
a data acquiring section that may acquire the first data;
a data analyzing section that may analyze a portion of the first data acquired by the data acquiring section by using the analysis method that may be defined in the analysis definition information acquired by the analysis definition acquiring section, the portion being indicated by the analysis range that may be defined in the analysis definition information acquired by the analysis definition acquiring section; and
a data converting section that may encode a result of the data analyzing section analyzing the portion of the first data by using the encoding method that may be defined in the code definition information acquired by the code definition acquiring section, thereby converting the result to the second data.

Effect of the Invention

The present invention uses analysis definition information to define a method of analyzing data and code definition information to define a method of encoding an analysis result for extracting information from data such as an image, an audio, and a moving picture. This makes it possible to extract information from raw data that has not been processed for extraction, to extract many different items of information from the same data depending on the use, etc., and to increase the amount of information that can be extracted.

Best Mode for Carrying out the Invention

A description is given of the embodiments of the present invention below with reference to drawings. In each of the following embodiments, an image is mainly used as an example of first data and a bit string is mainly used as an example of second data (hereinafter referred to as information).

Embodiment 1.

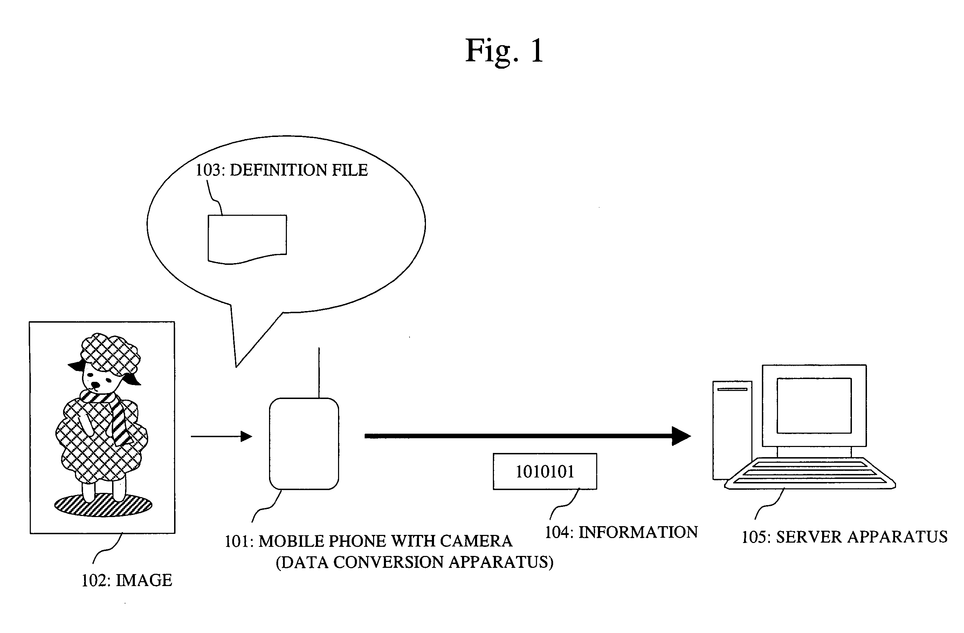

Fig. 1 shows a conceptual diagram illustrating a configuration of a data conversion system according to this embodiment.

In this embodiment, a mobile phone with camera 101 is an example of a data conversion apparatus. The mobile phone with camera 101 uses a built-in camera to photograph an image 102. The mobile phone with camera 101 holds a definition file 103 that describes the location of data to be read in the image 102, a type of computation to be applied to the read data, and the like. Information 104 is computed from the image 102 based on the content of the definition file 103, outputted, and used by the mobile phone with camera 101. Alternatively, as shown in Fig. 1, the mobile phone with camera 101 may transmit the information 104 to a server apparatus 105. In this case, the server apparatus 105 uses the information 104 received from the mobile phone with camera 101, and returns a response to the information 104 as need arises. The mobile phone with camera 101 and the server apparatus 105 may communicate directly with each other by means of infrared rays, etc. Alternatively, they may communicate with each other over a network, such as a mobile communication network, the Internet, a Local Area Network (LAN), or a Wide Area Network (WAN), or via a network combination.

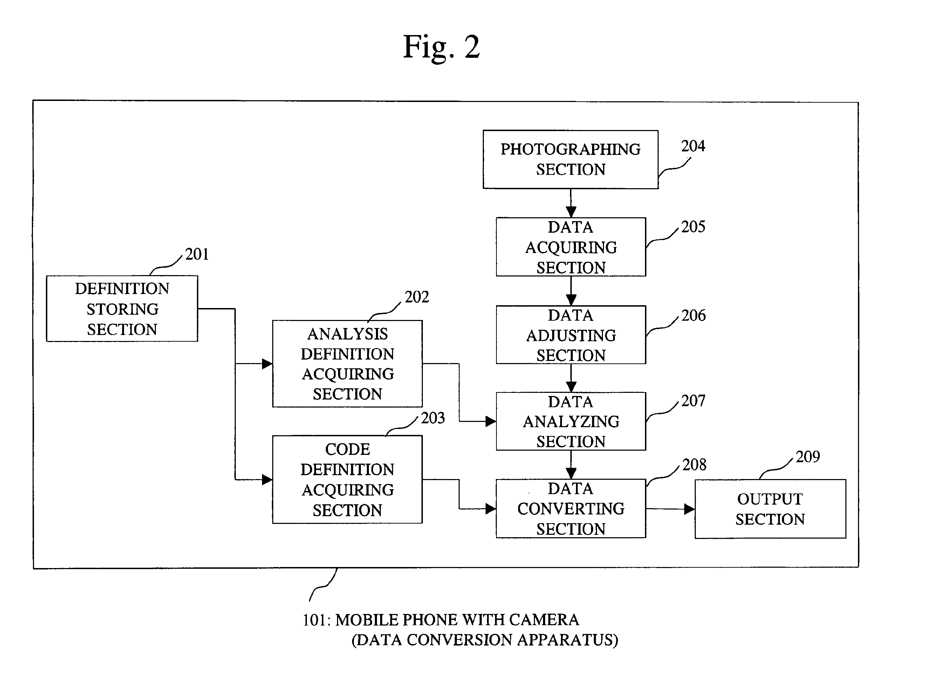

Fig. 2 shows a block diagram illustrating a configuration of the mobile phone with camera 101.

A definition storing section 201 is a nonvolatile memory and it stores the definition file 103. The definition file 103 describes analysis definition information and code definition information. The analysis definition information determines how much data in which part to be read in what order when the information 104 is extracted from the image 102. The code definition information defines a method of computing data taken out according to the analysis definition information.

An analysis definition acquiring section 202, a code definition acquiring section 203, a data acquiring section 205, a data adjusting section 206, a data analyzing section 207, and a data converting section 208 are programs, which are executed by a Central Processing Unit (CPU) using a memory, etc.

A photographing section 204 is a built-in camera in the mobile phone with camera 101 and it photographs the image 102. An output section 209, which is configured to include a wireless communication circuit, an antenna, etc., transmits data to the server apparatus 105. The output section 209 also includes a Liquid Crystal Display (LCD), etc. and displays a screen.

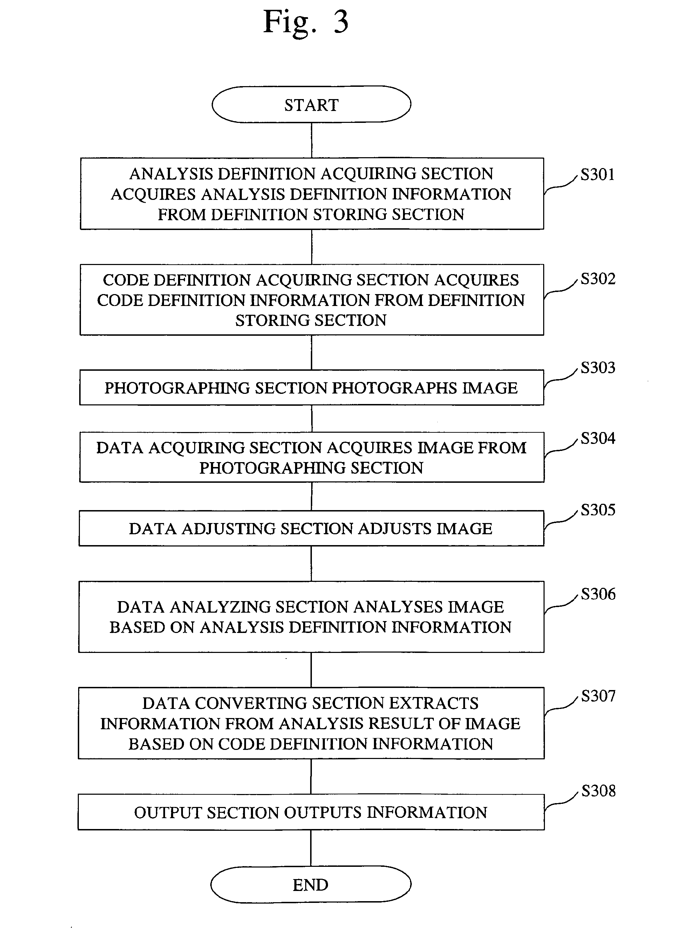

Fig. 3 shows a flow chart illustrating an operation of the mobile phone with camera 101. The following shows an operation of the mobile phone with camera 101 when extracting the information 104 from the image 102.

First, the analysis definition acquiring section 202 acquires from the definition storing section 201 the analysis definition information contained in the definition file 103 (S301). The code definition acquiring section 203 acquires from the definition storing section 201 the code definition information contained in the definition file 103 (S302).

Next, the photographing section 204 photographs the image 102 (S303). The data acquiring section 205 acquires the image 102 from the photographing section 204 (S304). When the photographing section 204 photographs the same image 102, a result of the data analyzing section 207 analyzing the image 102 has to be the same each time. However, the environment at a photographing site, and the direction, the position, etc. of the image 102 may not always be the same. Therefore, the data adjusting section 206 adjusts the image 102 in accordance with a given standard so that the same image 102 is always inputted to the data analyzing section 207 as the same data (S305). The method of adjusting the image 102 may include a method of erecting the image 102 (i.e., adjusting the direction of the image 102), a method of normalizing the size of the image 102 by using a general image processing technique (i.e., adjusting the size of the image 102), and the like.

The data analyzing section 207 upon receipt of data of the image 102 analyzes the image 102 based on the analysis definition information acquired by the analysis definition acquiring section 202 (S306). The data converting section 208 extracts the information 104 from an analysis result by the data analyzing section 207 based on the code definition information acquired by the code definition acquiring section 203 (S307).

Lastly, the output section 209 displays the information 104 on the screen (S308). If a further retrieval of other information is desired by using the information 104, then the process may be performed in the Step S308 as follows: the output section 209 transmits the information 104 to the server apparatus 105 where the information 104 is used as authentication information for authentication by the server apparatus 105; and the mobile phone with camera 101 then uses an information service provided by the server apparatus 105 upon success of the authentication.

Those steps need not be processed in such an order as that shown in Fig. 3. For example, the Step S301 where the analysis definition acquiring section 202 acquires the analysis definition information may be processed anywhere before the Step S306 where the data analyzing section 207 analyzes the image 102 based on the analysis definition information.

A description is now given of the analysis definition information and the code definition information in detail.

The analysis definition information defines for an analysis of the image 102 an analysis range of the image 102 subject to the analysis and a method for the analysis, which is not what is called an image processing method for extracting a general characteristic of the image 102, but a method for a user to perform an arbitrary analysis. The method is also called an analysis method or an analysis system. For example, coordinates of two or more points in the image 102 may be defined as the analysis range, and a method of measuring luminance or color of each point of the two or more points may be defined as the analysis method.

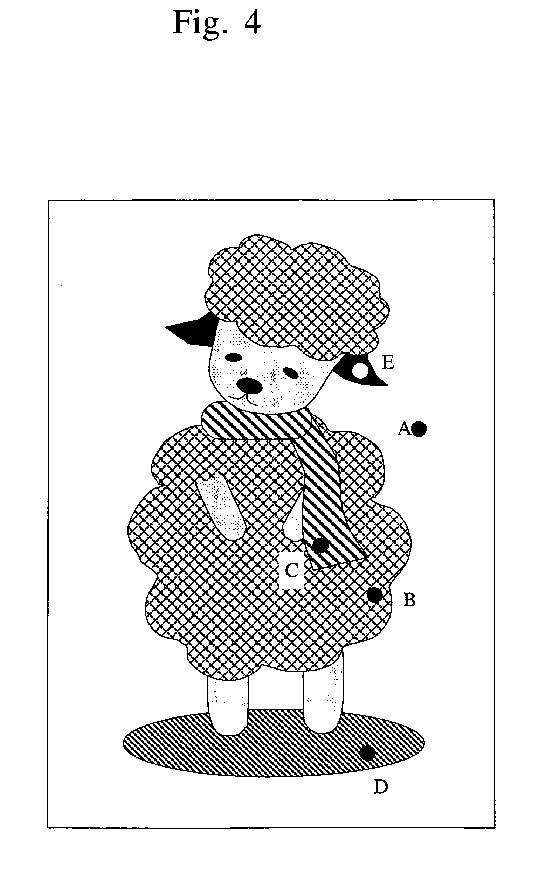

Fig. 4 shows an example of the image 102. Referring to Fig. 4, different hatching patterns show different colors. When the definition file 103 defines the coordinates of points A, B, C, D, and E and also defines that color is to be measured at the respective points, the data analyzing section 207 is to obtain five different measured values as a result of data analysis.

The code definition information includes the definition about a method of encoding a result of data analysis performed by the data analyzing section 207, which is performed in the data converting section 208. The method is also called an encoding method or an encoding system. With the above example, the result of data analysis is represented by the measured values of the color of the points A, B, C, D, and E. In the case of representing a measured value of color by an RGB (Red-Green-Blue) system, when it is defined that 1 is outputted if the value of R is larger than G and 0 otherwise as an example of the encoding method, the data converting section 208 outputs five values in bits corresponding to the points A, B, C, D, and E.

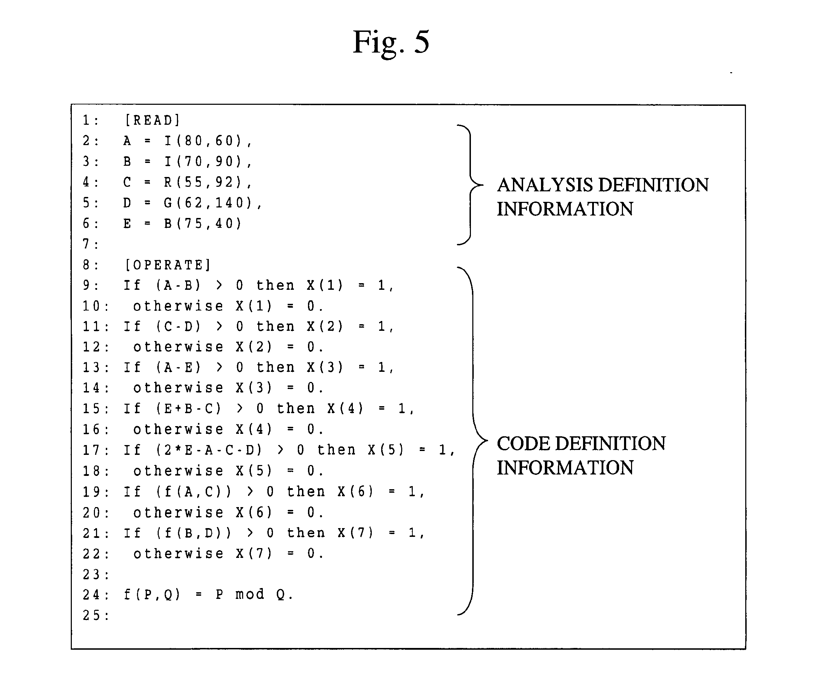

Fig. 5 shows an example of the definition file 103. The definition file 103 describes analysis definition information and code definition information.

Descriptions shown in lines 1-6 of Fig. 5 are an example of the analysis definition information. A description,

$$A = I\,(80,\,60)$$

in line 2, for example, is an instruction to read a value of luminance I of a point of a plane coordinate (80, 60) in the image 102 and assign it to a variable A. A description,

$$C = R\,(55,\,92)$$

in line 4 is an instruction to read an R component only from the RGB components of the point of a coordinate (55, 92) and assign it to a variable C. It is thus defined with the example of the analysis definition information of Fig. 5, to read the values of luminance of five points A to E and a single component of color information. Alternatively, it is also possible to define computation not only by reading a single component of color information but also by looking at color information as an RGB vector, for example. It is also possible to make the same definition as that of the above analysis definition information by using various other description methods.

Descriptions shown in lines 8-24 of Fig. 5 are an example of the code definition information. It defines a method of processing read data. A description,

$$If\,(A\text{-}B) > 0 \text{ then } X(1) = 1,$$

$$\text{otherwise } X(1) = 0.$$

in lines 9-10, for example, indicates that an output X(1) becomes 1 or 0 depending on whether the value obtained by subtracting B from A is not less than 0 or less than 0. It must be noted that the X(1) indicates the value of the first bit in a bit string. A description,

$$If\,(E\text{+}B\text{-}C) > 0 \text{ then } X(4) = 1,$$

$$\text{otherwise } X(4) = 0.$$

in lines 15-16 indicates that 1 is assigned to X(4) when the value of E+B-C is not less than 0 and 0 is assigned otherwise. In addition, a function may be defined as the one in line 24 to make similar definition by using the function defined as in lines 19 and 21.

Under the environment which many users encounter, the points A and B may be similarly brighter or darker than the normal image 102. However, by using differential information on values of luminance such as the values of luminance A and B in lines 2 and 3 and an information extraction algorithm in lines 9-10, secure extraction of information is possible even under various environments of different illuminance on the image 102. This is because the change in luminance of the whole image 102 may be offset by eliminating a difference.

As color information, red is generally represented by (255, 0, 0), green by (0, 255, 0), and blue by (0, 0, 255), for example, in the RGB representation. Any other color can be represented as a vector of the three components. Thus, when they are combined appropriately, various kinds of information can be defined.

The definition file 103, which has been described as a single file in the foregoing description, may alternatively be divided into two or more different files. In this case, a mechanism in which a user can extract information 104 needed only by having two or more required definition files 103 (including mask information) together with the image 102 may be provided.

With the example of Fig. 5, seven bits X(1) to X(7) are thus obtained as the information 104. They are displayed on a display or written in a file, and then used by a user. With the above example, the information 104 of seven bits is obtained from image data at the five points on the image 102. A bit string of more bits may be generated when various computations are defined in the definition file 103. In addition, reading points may also be increased arbitrarily. This also serves to increase the amount of information to be generated as much as needed. Therefore, it becomes possible to implement a method of creating different definition files 103 depending on the use so that different information 104 are extracted from the same image 102.

Different information 104 may be extracted from the same image 102 by altering the definition file 103. It is also possible to extract different information 104 by modifying the image 102 in the case of using the same definition file 103. An example of such case is shown below.

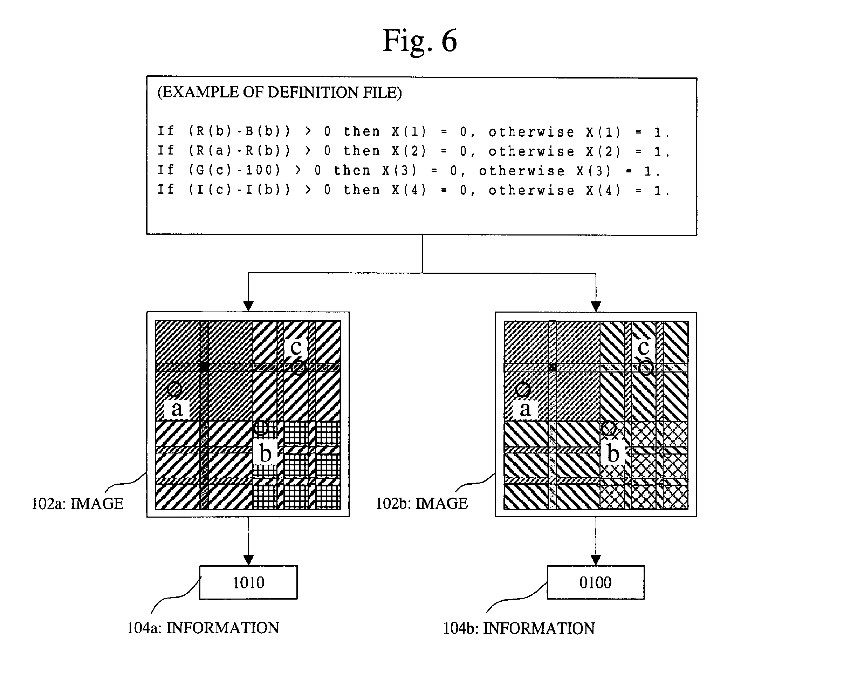

Fig. 6 shows an example of extracting different information 104 from different images 102 by using the same definition file 103. Different hatching patterns in Fig. 6 show different colors.

An image 102a on the left and an image 102b on the right in Fig. 6 have the same shape with different color and luminance. With the example of Fig. 6, 1010 is extracted from the image 102a on the left and 0100 is extracted from the image 102b on the right by using the same definition file 103. Referring to the descriptions of the definition file 103, R(b) represents an R component of RGB at a point b, and I(c) represents luminance of a point c, for example.

It is allowed to invert an appropriate bit or do similar things by manipulating the color information and the luminance information of the image 102. Therefore, a method like using the two-dimensional barcode may be implemented only by changing the color of the image 102, for example.

Thus, according to this embodiment, totally different information 104 may be extracted by combining an ordinary image 102 and a definition file 103 thereof. This may be used to implement a method of information extraction that may substitute the two-dimensional barcode, etc.

According to this embodiment, when information is extracted from image data by making a random access to a plane in the same manner as existing mobile phones, etc., there is no need of using the dry and tasteless black-and-white dot pattern like the second-dimensional barcode as image data. This makes it possible to use data that is easy to recognize, such as a "beautiful image" that has a meaning to humans, like the example shown in Fig. 4.

According to this embodiment, it is also allowed to increase the amount of information that can be extracted almost infinitely depending on the content of the description of the definition file 103.

According to this embodiment, it is also allowed to extract the information 104 needed from basically unprocessed image data, which is different from the case of barcodes, etc., by using the definition file 103.

According to this embodiment, a definition file 103, which describes a method of extracting information 104 from an image 102, is used. Then, it is possible to extract different information 104 even from the same image 102 by using the difference of definition files 103. It thus becomes possible to extract different information 104 for many purposes in addition to keys or IDs used for accessing the server apparatus 105. Hence, the information 104 may be extracted even locally without accessing the server.

According to this embodiment, it is also allowed to extract the information 104 for general use, irrespective of individual storage devices, depending on the definition information described in the definition file 103.

According to this embodiment, the image 102 from which the information 104 is extracted by using the definition file 103 is mainly explained as two-dimensional. Alternatively, however, the information 104 may also be extracted from a three-dimensional image. With a three-dimensional image, an altitudinal coordinate may be defined in addition to a longitudinal coordinate and a lateral coordinate in the definition file 103 like the one shown in Fig. 5. Then, a value of luminance or an RGB component of a spatial coordinate defined in the definition file 103 is read, and processed (encoded) by using a method defined in the definition file 103, thereby obtaining the information 104.

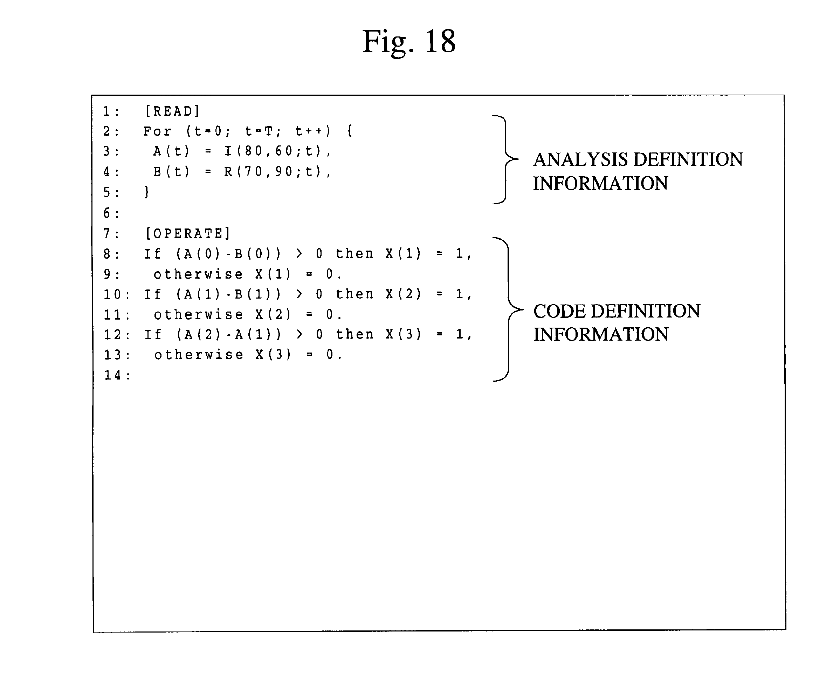

According to this embodiment, it is mainly explained as a still image what the information 104 is extracted from by using the definition file 103. Alternatively, however, the information 104 may also be extracted from a moving picture. Fig. 18 shows an example of the definition file 103 when the information 104 is extracted from video data.

The analysis range spreads to spatial axial directions such as longitudinal, lateral, and altitudinal directions with a still image. With a moving picture, however, the analysis range further spreads to a temporal axial direction. Specifically, the value of luminance or color information (an RGB component, etc.) of a certain point in video data varies in time. With the example of Fig. 18, it is defined in the definition file 103 to input the value of luminance of the point of a coordinate (80, 60) at a time t to a variable A, and input color information (an R component, here) of the point of a coordinate (70, 90) at the time t to a variable B. Then, it is defined in the same manner as that of a still picture to obtain bit information to be outputted by using a difference between the values of A and B, or the like. In line 8, for example, a value to be outputted is determined based on a difference between A and B at a time "0". In line 10, a value to be outputted is determined based on a difference between A and B at a time "1". In line 12, a value to be outputted is determined based on a difference between values of luminance of the point of the same coordinate (80, 60) at different times (the time "1" and a time "2"). Thus, when the information 104 is extracted from video data, the definition file 103 specifies a time or a time interval, and defines a method of encoding the measured value of luminance or color at the specified time point (time), or a difference between the measured values of luminance or color in the specified time period (time interval). Thus, the use of the differences of data not only in the spatial axis direction but also in the temporal axis direction allows for a greater diversity of data analysis than that with a still image.

Alternatively, any type of data other than those mentioned earlier may be used to extract the information 104 therefrom by using the definition file 103. Audio, for example, which is one-dimensional data, has latitude in the temporal axis direction. Therefore, it is possible to read different data at a different time or in a different time interval. In this case, the definition file 103 specifies a time or a time interval. In addition, it describes a method of quantifying a frequency characteristic or power (amplitude) at the specified time point (time), or a difference of frequency or power in the specified time period (time interval). Then, the measured value or the difference of the measured values obtained by measuring audio frequency or power at the time point or the time period specified in the definition file 103 is encoded, thereby obtaining the information 104.

Embodiment 2.

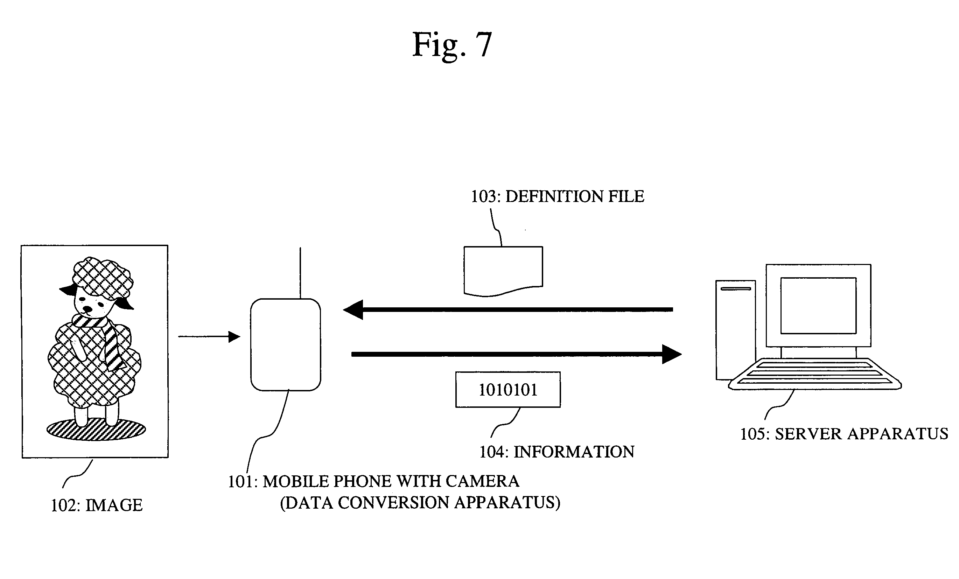

Fig. 7 shows a conceptual diagram illustrating a configuration of a data conversion system according to this embodiment.

In this embodiment, the mobile phone with camera 101 is an example of a data conversion apparatus. The mobile phone with camera 101 uses a built-in camera to photograph the image 102. The server apparatus 105 holds the definition file 103 that describes the location of data to be read in the image 102, a type of computation to be applied to the read data, and the like. The mobile phone with camera 101 receives the definition file 103 from the server apparatus 105. The information 104 is computed from the image 102 based on the content of the definition file 103, outputted, and used by the mobile phone with camera 101. Alternatively, as shown in Fig. 7, the mobile phone with camera 101 may transmit the information 104 to the server apparatus 105. In this case, the server apparatus 105 uses the information 104 received from the mobile phone with camera 101, and then sends a reply to the information 104 as need arises. The mobile phone with camera 101 and the server apparatus 105 may communicate directly with each other by means of infrared rays, etc. Alternatively, they may communicate with each other over a network, such as a mobile communication network, the Internet, a LAN, or a WAN, or via a network combination.

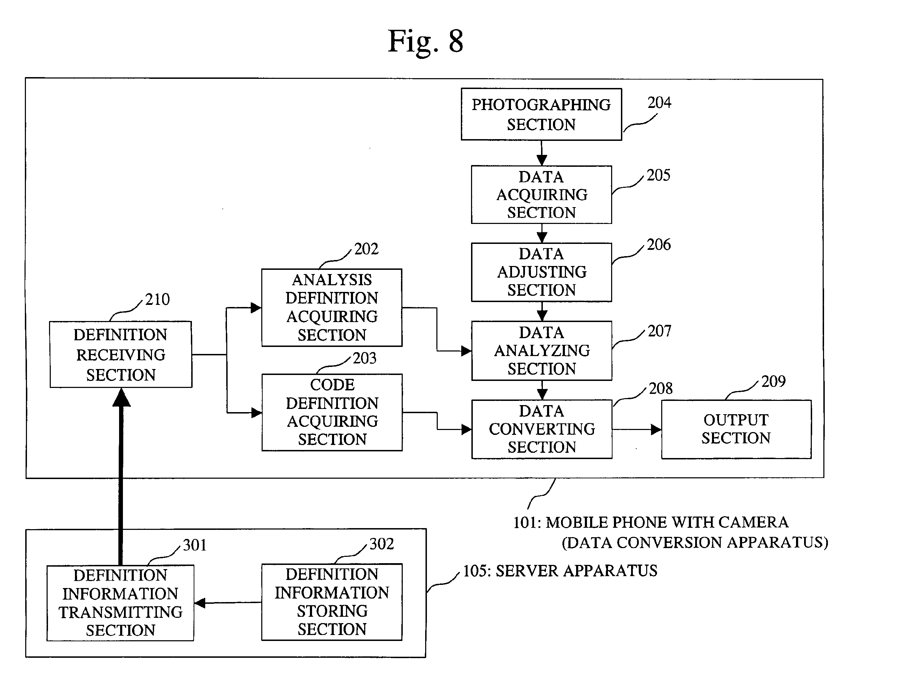

Fig. 8 shows a block diagram illustrating a configuration of the mobile phone with camera 101 and the server apparatus 105.

Referring to the server apparatus 105, a definition information storing section 302 is a nonvolatile memory and it stores the definition file 103. The definition file 103 describes analysis definition information and code definition information. The analysis definition information defines how much data in which part to be read in what order when the information 104 is extracted from the image 102. The code definition information defines a method of computing data taken out according to the analysis definition information. A definition information transmitting section 301, which is configured to include a communication module, etc., transmits the definition file 103 to the mobile phone with camera 101.

In the mobile phone with camera 101, the definition receiving section 210, which is configured to include a wireless communication circuit, an antenna, etc., receives the definition file 103 from the server apparatus 105.

The analysis definition acquiring section 202, the code definition acquiring section 203, the data acquiring section 205, the data adjusting section 206, the data analyzing section 207, and the data converting section 208 are programs, which are executed by a CPU using a memory, etc.

The photographing section 204 is a built-in camera in the mobile phone with camera 101 and it photographs the image 102. The output section 209, which is configured to include a wireless communication circuit, an antenna, etc., transmits data to the server apparatus 105. The output section 209, which also includes an LCD, etc., displays a screen.

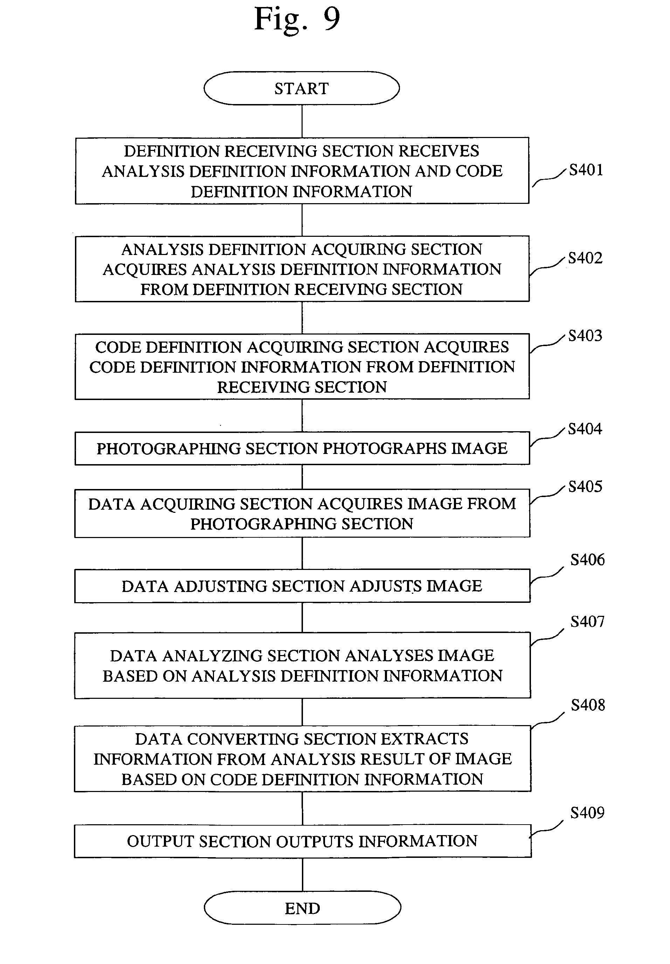

Fig. 9 shows a flow chart illustrating an operation of the mobile phone with camera 101. An operation of the mobile phone with camera 101 when extracting the information 104 from the image 102 is explained below.

First, the definition receiving section 210 receives the definition file 103 from the definition information transmitting section 301 of the server apparatus 105 (S401).

Next, the analysis definition acquiring section 202 acquires analysis definition information contained in the definition file 103 from the definition receiving section 210 (S402). The code definition acquiring section 203 acquires code definition information contained in the definition file 103 from the definition receiving section 210 (S403).

Then, the photographing section 204 photographs the image 102 (S404). The data acquiring section 205 acquires the image 102 from the photographing section 204 (S405). When the photographing section 204 photographs the same image 102, a result of the data analyzing section 207 analyzing the image 102 has to be the same each time. However, the environment at a photographing site, and the direction, the position, etc. of the image 102 may not always be the same. Therefore, the data adjusting section 206 adjusts the image 102 in accordance with a given standard so that the same image 102 is always inputted to the data analyzing section 207 as the same data (S406). The method of adjusting the image 102 may include a method of erecting the image and a method of normalizing the size of the image 102 by using a general image processing technique.

The data analyzing section 207 upon receipt of data of the image 102 analyzes the image 102 based on the analysis definition information acquired by the analysis definition acquiring section 202 (S407). The data converting section 208 extracts the information 104 from an analysis result by the data analyzing section 207 based on the code definition information acquired by the code definition acquiring section 203 (S408).

Lastly, the output section 209 displays the information 104 on the screen (S409). If a further retrieval of other information is desired by using the information 104, then the process may be performed in the Step S409 as follows: the output section 209 transmits the information 104 to the server apparatus 105 where the information 104 is used as authentication information for authentication by the server apparatus 105; and the mobile phone with camera 101 then uses an information service provided by the server apparatus 105 upon success of the authentication.

Those steps, however, need not always be processed in the order shown in Fig. 9. The Step S403, for example, in which the code definition acquiring section 203 acquires the code definition information, may be processed anywhere before the Step S408 in which the data converting section 208 extracts information based on the code definition information. It is also possible to omit the process of the Step S409, for example, in which the output section 209 outputs the information 104.

The details of the analysis definition information and the code definition information are the same as those described in the first embodiment.

According to this embodiment, similarly to the case of the first embodiment, alteration of the definition file 103 may allow for extraction of different information 104 from the same image 102. Modification of the image 102 may also allow for extraction of different information 104 even if the same definition file 103 is used.

According to this embodiment, an administrator of a service provided by the server apparatus 105, for example, can manipulate the information 104 to be extracted from the same image 102 since the mobile phone with camera 101 downloads the definition file 103 from the server apparatus 105.

According to this embodiment, similarly to the first embodiment, it is also allowed to use data other than a two-dimensional image, such as a three-dimensional image, a moving picture, or an audio, as data from which the information 104 is to be extracted by using the definition file 103.

Embodiment 3.

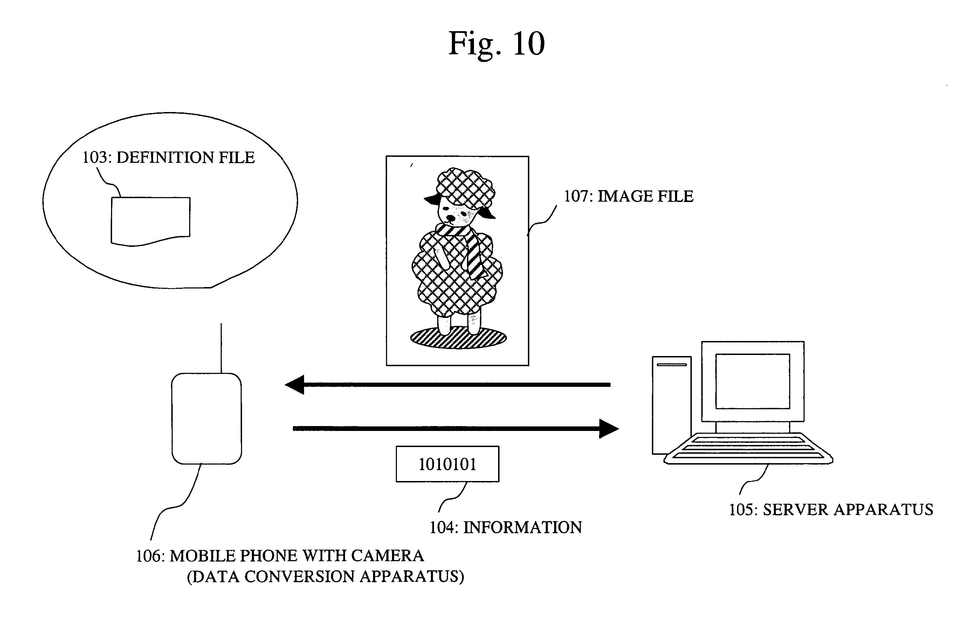

Fig. 10 shows a conceptual diagram illustrating a configuration of a data conversion system according to this embodiment.

In this embodiment, a mobile phone 106 is an example of a data conversion apparatus. The server apparatus 105 holds an image file 107. The mobile phone 106 holds the definition file 103 that describes the location of data to be read in the image file 107, a type of computation to be applied to the read data, and the like. The mobile phone 106 receives the image file 107 from the server apparatus 105. The information 104 is computed from the image file 107 based on the content of the definition file 103, outputted, and used by the mobile phone 106. Alternatively, as shown in Fig. 10, the mobile phone 106 may transmit the information 104 to the server apparatus 105. In this case, the server apparatus 105 uses the information 104 that is received from the mobile phone 106, and returns a response to the information 104 as need arises. The mobile phone 106 and the server apparatus 105 may communicate directly with each other via infrared rays, etc. They may otherwise communicate with each other over a network, such as a mobile communication network, the Internet, a LAN, or a WAN, or via a network combination.

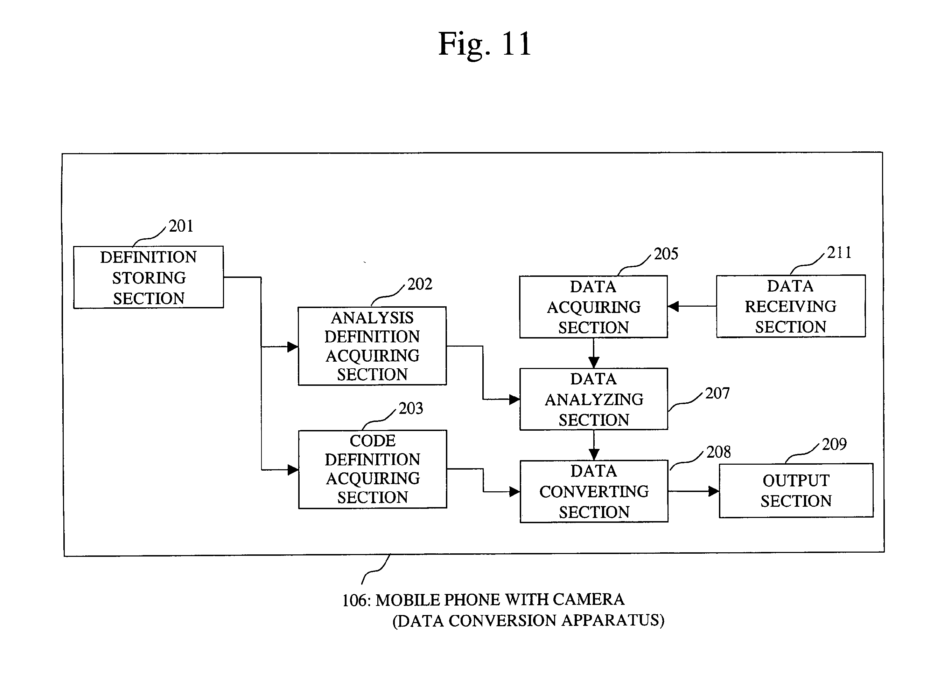

Fig. 11 shows a block diagram illustrating a configuration of the mobile phone 106.

The definition storing section 201 is a nonvolatile memory and it stores the definition file 103. The definition file 103 describes analysis definition information and code definition information. The analysis definition information defines how much data in which part to be read in what order when the information 104 is extracted from the image file 107. The code definition information determines a method of computing data taken out according to the analysis definition information.

A data receiving section 211, which is configured to include a wireless communication circuit, an antenna, etc., receives the image file 107 from the server apparatus 105.

The analysis definition acquiring section 202, the code definition acquiring section 203, the data acquiring section 205, the data analyzing section 207, and the data converting section 208 are programs, which are executed by a CPU using a memory, etc.

The output section 209, which is configured to include a wireless communication circuit, an antenna, etc., transmits data to the server apparatus 105. The output section 209, which also includes an LCD, etc., displays a screen.

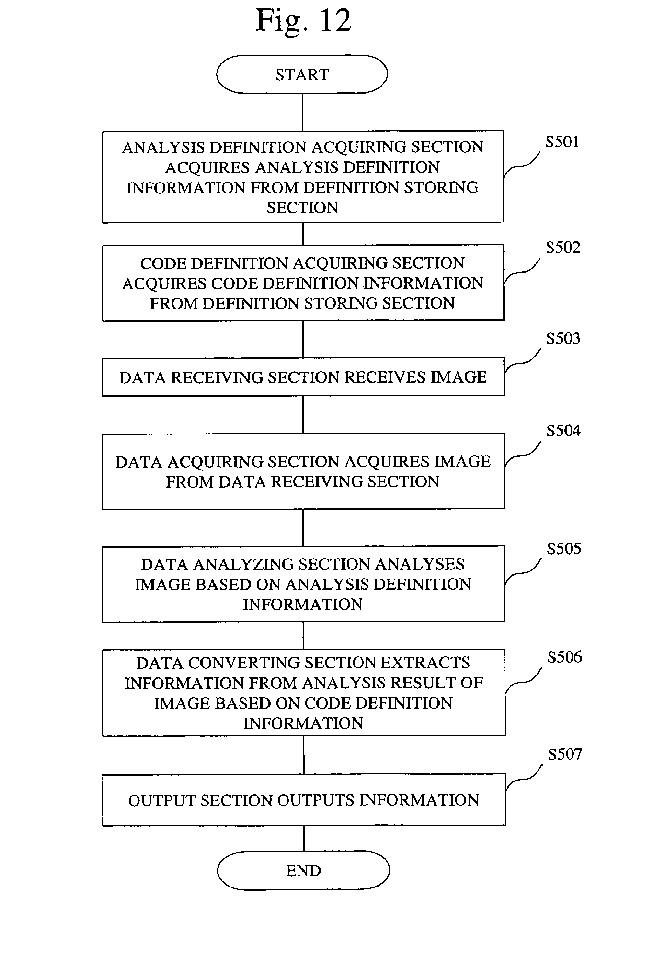

Fig. 12 shows a flow chart illustrating an operation of the mobile phone 106. The following shows an operation of the mobile phone 106 when extracting the information 104 from the image file 107.

First, the analysis definition acquiring section 202 acquires the analysis definition information contained in the definition file 103 from the definition storing section 201 (S501). The code definition acquiring section 203 acquires the code definition information contained in the definition file 103 from the definition storing section 201 (S502).

Next, the data receiving section 211 receives the image file 107 from the server apparatus 105 (S503). The data acquiring section 205 acquires an image of the image file 107 from the data receiving section 211 (S504), and transfers the image to the data analyzing section 207.

The data analyzing section 207 upon receipt of image data of the image file 107 analyzes the image based on the analysis definition information acquired by the analysis definition acquiring section 202 (S505). The data converting section 208 extracts the information 104 from an analysis result by the data analyzing section 207 based on the code definition information acquired by the code definition acquiring section 203 (S506).

Lastly, the output section 209 displays the information 104 on the screen (S507). If a further retrieval of other information is desired by using the information 104, then the process may be performed in the Step S507 as follows: the output section 209 transmits the information 104 to the server apparatus 105 where the information 104 is used as authentication information for authentication by the sever apparatus 105; and the mobile phone 106 then uses an information service provided by the server apparatus 105 upon success of the authentication.

Those steps need not always be processed in the same order as that shown in Fig. 12. The Step S503, for example, where the data receiving section 211 receives the image file 107, may be processed anywhere before the Step S504 where the data acquiring section 205 acquires the image.

The details of the analysis definition information and the code definition information are the same as those described in the first embodiment.

According to this embodiment, similarly to the first embodiment, alteration of the definition file 103 may allow for extraction of different items of the information 104 from the same image 102. Modification of the image 102 may also allow for extraction of different items of the information 104 even if the same definition file 103 is used.

According to this embodiment, the mobile phone 106 does not need any means for photographing an image, such as a camera since the mobile phone 106 downloads the image file 107 from the server apparatus 105. This allows for the use of a less expensive and general-purpose data conversion apparatus.

According to this embodiment, similarly to the first embodiment, it is also allowed to use data other than a two-dimensional image, such as a three-dimensional image, a moving picture, and an audio, as data from which the information 104 is to be extracted by using the definition file 103.

Embodiment 4.

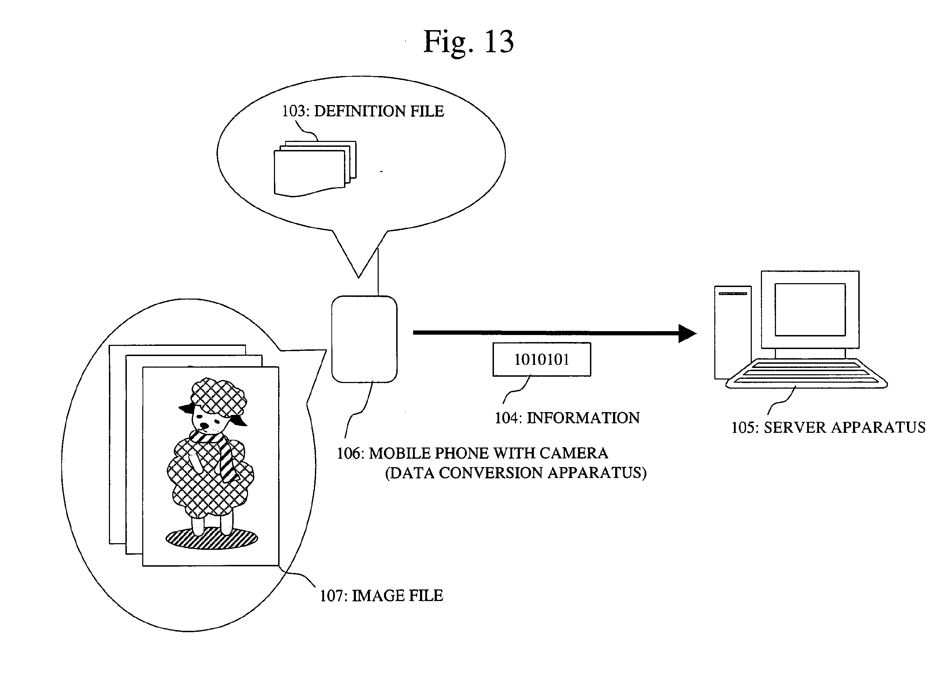

Fig. 13 shows a conceptual diagram illustrating a configuration of a data conversion system according to this embodiment.

In this embodiment, the mobile phone 106 is an example of a data conversion apparatus. The mobile phone 106 holds two or more image files 107. The mobile phone 106 also holds two or more definition files 103 each of which describes the location of data to be read in the image files 107, a type of computation to be applied to the read data, and the like. An image file 107 and a definition file 103 are selected. The information 104 is computed from the image file 107 based on the content of the definition file 103, outputted, and used by the mobile phone 106. Alternatively, as shown in Fig. 1, the mobile phone 106 may transmit the information 104 to the server apparatus 105. In this case, the server apparatus 105 uses the information 104 that is received from the mobile phone 106, and returns a response to the information 104 as need arises. The mobile phone 106 and the server apparatus 105 may communicate directly with each other via infrared rays, etc. They may otherwise communicate with each other over a network, such as a mobile communication network, the Internet, a Local Area Network (LAN), or a Wide Area Network (WAN), or via a network combination.

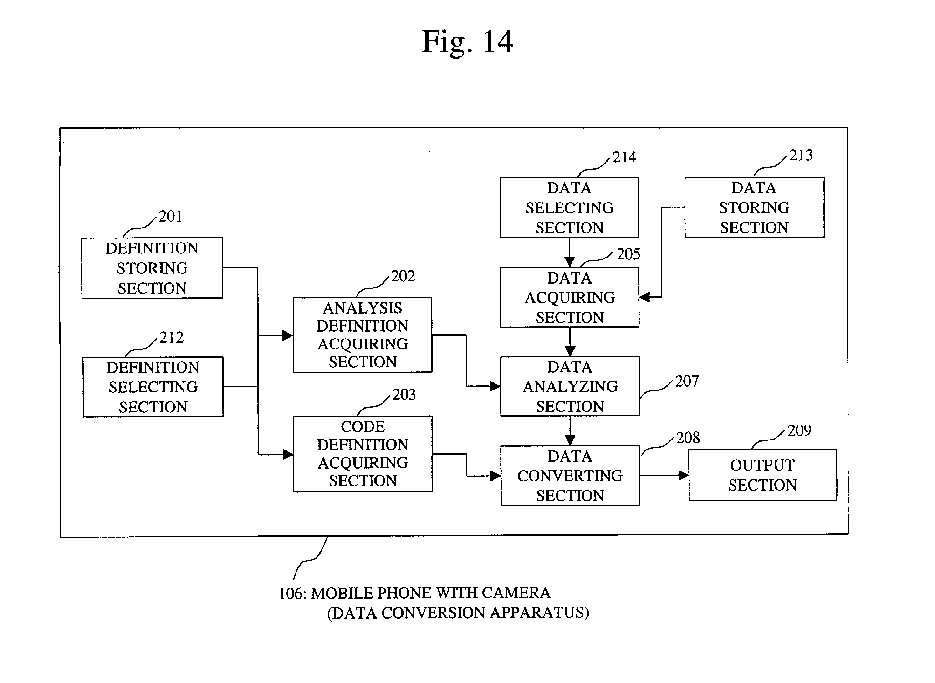

Fig. 14 shows a block diagram illustrating a configuration of the mobile phone 106.

The definition storing section 201 is a nonvolatile memory and it stores two or more of the definition files 103. The definition files 103 describes analysis definition information and code definition information. The analysis definition information defines how much data in which part to be read in what order when the information 104 is extracted from the image 102. The code definition information determines a method of computing data taken out according to the analysis definition information.

A data storing section 213 is a nonvolatile memory and it stores two or more image files 107.

The analysis definition acquiring section 202, the code definition acquiring section 203, the data acquiring section 205, the data analyzing section 207, and the data converting section 208 are programs, which are executed by a CPU using a memory, etc.

The output section 209, which is configured to include a wireless communication circuit, an antenna, etc., transmits data to the server apparatus 105. The output section 209, which also includes an LCD, etc., displays a screen.

A definition selecting section 212 and a data selecting section 214 are, for example, operation keys. The definition selecting section 212 selects a definition file 103 stored in the definition storing section 201. The data selecting section 214 selects an image file 107 stored in the data storing section 213.

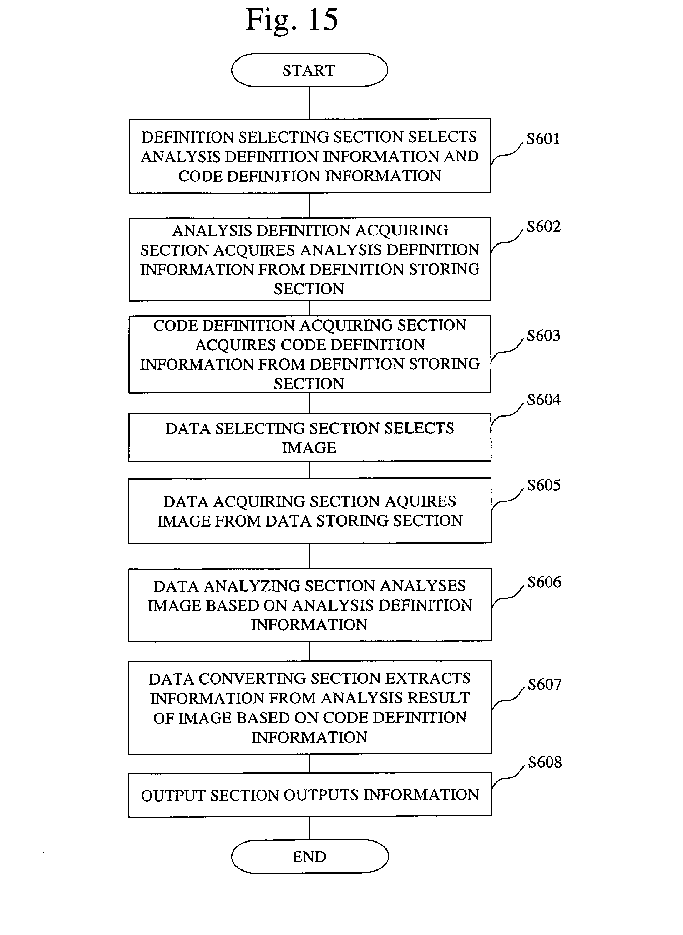

Fig. 15 shows a flow chart illustrating an operation of the mobile phone 106. The following shows an operation of the mobile phone 106 when extracting the information 104 from the image file 107.

First, the definition selecting section 212 selects one of the definition files 103 stored in the definition storing section 201 (S601). An example of the process is as follows: the output section 209 displays a list of the definition files 103 stored in the definition storing section 201 on a screen or the like; and a user of the mobile phone 106 selects a definition file 103 by using operation keys.

When the definition information is divided into two or more definition files 103, two or more definition files 103 are selected.

Subsequently, the analysis definition acquiring section 202 acquires the analysis definition information included in the definition file 103 that is selected from the definition storing section 201 (S602). The code definition acquiring section 203 acquires the code definition information contained in the definition file 103 that is selected from among those stored in the definition storing section 201 (S603).

Next, the data selecting section 214 selects one of the image files 107 stored in the data storing section 213 (S604). An example of this process is as follows: the output section 209 displays a list of the image files 107 stored in the data storing section 213 on a screen or the like; and a user of the mobile phone 106 selects an image file 107 by using an operation keys.

Then, the data acquiring section 205 acquires an image in the image file 107 that is selected from the data storing section 213 (S605), and transfers the image to the data analyzing section 207.

The data analyzing section 207 upon receipt of image data of the image file 107 analyzes the image based on the analysis definition information acquired by the analysis definition acquiring section 202 (S606). The data converting section 208 extracts the information 104 from an analysis result by the data analyzing section 207 based on the code definition information acquired by the code definition acquiring section 203 (S607).

Lastly, the output section 209 displays the information 104 on the screen (S609). If a further retrieval of other information is desired by using the information 104, then the process may be performed in the Step S609 as follows: the output section 209 transmits the information 104 to the server apparatus 105 where the information 104 is used as authentication information for authentication by the server apparatus 105; and the mobile phone 106 then uses an information service provided by the server apparatus 105 upon success of the authentication.

Those steps need not always be processed in the order shown in Fig. 15. For example, the Step S604 where the data selecting section 214 selects the image file 107 may be processed anywhere before the Step S605 where the data acquiring section 205 acquires the image.

The details of the analysis definition information and the code definition information are the same as those described in the first embodiment.

According to this embodiment, similarly to the first embodiment, alteration of a definition file 103 may allow, for extraction of different information 104 from the same image 102. Modification of the image 102 may also allow for extraction of different information 104 even if the same definition file 103 is used.

According to this embodiment, the mobile phone 106 stores two or more of the image files 107 and two or more definition files 103, thereby allowing a user or a program of the mobile phone 106 to select an image file 107 and a definition file 103. This makes it possible that the mobile phone 106 extracts various information 104 independently.

According to this embodiment, similarly to the first embodiment, it is also allowed to use data other than a two-dimensional image, such as a three-dimensional image, a moving picture, and an audio, as data from which the information 104 is to be extracted by using the definition file 103.

Embodiment 5.

In the first embodiment to the fourth embodiment, a mobile phone is used as an example of a data conversion apparatus, whereas other electronic equipment may also be used. In this embodiment, a description is given of an example of using a computer as a data conversion apparatus.

The internal configuration and operation of a data conversion apparatus of this embodiment are the same as those described in the first embodiment to the fourth embodiment.

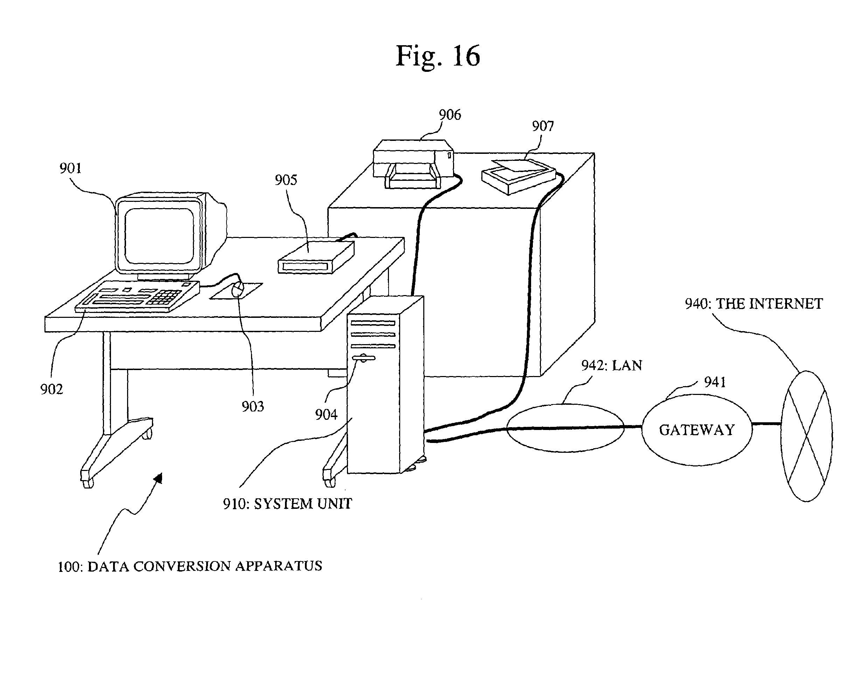

Fig. 16 shows a diagram illustrating an example of features of a data conversion apparatus according to this embodiment.

Referring to Fig. 16, a data conversion apparatus 100 includes a system unit 910, a Cathode Ray Tube (CRT) display 901, a keyboard (K/B) 902, a mouse 903, a compact disc device (CDD) 905, a printer 906, a scanner 907, all of which are connected via a cable.

The data conversion apparatus 100 is connected to the Internet 940 via a LAN 942 and a gateway 941. A server apparatus is connected to the LAN 942 or the Internet 940. The server apparatus is implemented on a computer in the same manner as that of the data conversion apparatus.

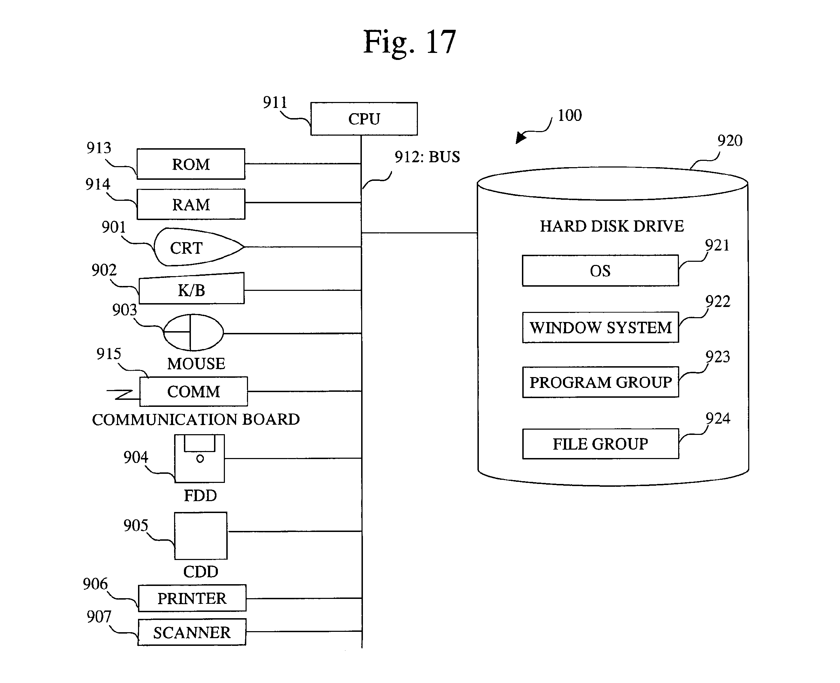

Fig. 17 shows a diagram illustrating an example of a hardware configuration of a data conversion apparatus according to this embodiment.

Referring to Fig. 17, the data conversion apparatus 100 includes a Central Processing Unit (CPU) 911 for executing a program. The CPU 911 is connected to a ROM 913, a RAM 914, a communication board 915, the CRT display 901, the K/B 902, the mouse 903, a Flexible Disk Drive (FDD) 904, a hard disk drive 920, the CDD 905, the printer 906, and the scanner 907 via a bus 912.

The RAM 914 is an example of a volatile memory. The ROM 913, the FDD 904, the CDD 905, and the hard disk drive 920 are examples of nonvolatile memories. Each of these is an example of a data storing section or a definition storing section. A definition information storing section of the server apparatus is implemented on a memory similar to these devices.

The communication board 915, which is connected to the LAN 942, etc., is an example of a data receiving section or a definition receiving section. A definition information transmitting section of the server apparatus is implemented on a similar communication module.

For example, the K/B 902, the FDD 904, etc. are examples of a data selecting section or a definition selecting section.

Each of the CRT display 901, the printer 906, the communication board 915, etc., for example, is an example of an output section.

The scanner 907, etc., for example, may be used as a replacement for the photographing section described in the first embodiment and the second embodiment.

It must be noted that the communication board 915 may not necessarily be connected to the LAN 942, but may be connected directly to the Internet 940 or a WAN such as an ISDN. When it is connected directly to the Internet 940 or a WAN such as an ISDN, the data conversion apparatus 100 may be connected to the Internet 940 or a WAN such as an ISDN, and the gateway 941 is therefore not needed.

The hard disk drive 920 stores an operating system (OS) 921, a window system 922, a program group 923, and a file group 924. The program group 923 is executed by the CPU 911, the OS 921 and the window system 922.

The program group 923 stores programs for executing functions corresponding to the "sections" described in the first embodiment to the fourth embodiment. A program is read by the CPU 911 and executed.

The file group 924 stores as files process results of the steps in the flow charts described in the first embodiment to the fourth embodiment.

Arrows in the block diagrams described in the first embodiment to the fourth embodiment mainly show data input/output. To implement the data input/output, data is stored in the hard disk drive 920, or other storage media such as a Flexible Disk (FD), an optical disk, a compact disc (CD), a mini disk (MD), and a Digital Versatile Disk (DVD). Such data may otherwise be transmitted over a signal line or other transmission media.

It must also be noted that the "sections" described in the first embodiment to the fourth embodiment may alternatively be implemented by firmware stored in the ROM 913. It may otherwise be implemented by software alone, hardware alone, a combination of software and hardware, or a combination of software, hardware, and firmware.

It must also be noted that the programs described in the first embodiment to the fourth embodiment may also be stored using a storage device with the hard disk drive 920 or other storage media such as a Flexible Disk (FD), an optical disk, a compact disc (CD), a mini disk (MD), and a Digital Versatile Disk (DVD).

The methods and apparatuses described in the first embodiment to the fifth embodiment are characterized by including an unprocessed primary data file of an image or an audio having a primary purpose; and a definition file that defines a method of reading, processing, and converting part or all of the data. The methods and apparatuses are further characterized by generating and extracting information as secondary data, which is different from the primary data, based on the two files.

The methods and apparatuses are also characterized in that the same data extraction may be performed by using a processed file as the primary data file.

The methods and apparatuses are further characterized by extracting information as the secondary data by downloading one or both of the primary data file and the definition file from a separate server, etc.

The methods and apparatuses are still further characterized by extracting information as the secondary data by downloading one or both of the primary data file and the definition file from a separate server, etc., transmitting the second data to a server that provides a variety of services, and taking out information needed.

The methods and apparatuses are also characterized by including a higher order definition file that alters the parameters of the definition file, and processes the primary data file and the definition file.

Brief Description of the Drawings

[Fig. 1] It shows a conceptual diagram illustrating a configuration of a data conversion system according to a first embodiment.

[Fig. 2] It shows a block diagram illustrating a configuration of a data conversion apparatus according to the first embodiment.

[Fig. 3] It shows a flow chart illustrating an operation of a data conversion apparatus according to the first embodiment.

[Fig. 4] It shows a diagram illustrating an example of an image from which information is extracted.

[Fig. 5] It shows a diagram illustrating an example of a definition file that describes a method of extracting information from an image.

[Fig. 6] It shows a diagram illustrating an example of extracting different information from different images by using the same definition file.

[Fig. 7] It shows a conceptual diagram illustrating a configuration of a data conversion system according to a second embodiment.

[Fig. 8] It shows a block diagram illustrating a configuration of a data conversion apparatus and a server apparatus according to the second embodiment.

[Fig. 9] It shows a flow chart illustrating an operation of a data conversion apparatus according to the second embodiment.

[Fig. 10] It shows a conceptual diagram illustrating a configuration of a data conversion system according to a third embodiment.

[Fig. 11] It shows a block diagram illustrating a configuration of a data conversion apparatus according to the third embodiment.

[Fig. 12] It shows a flow chart illustrating an operation of a data conversion apparatus according to the third embodiment.

[Fig. 13] It shows a conceptual diagram illustrating a configuration of a data conversion system according to a fourth embodiment.

[Fig. 14] It shows a block diagram illustrating a configuration of a data conversion apparatus according to the fourth embodiment.

[Fig. 15] It shows a flow chart illustrating an operation of a data conversion apparatus according to the fourth embodiment.

[Fig. 16] It shows a diagram illustrating an example of features of a data conversion apparatus according to a fifth embodiment.

[Fig. 17] It shows a diagram illustrating an example of a hardware configuration of a data conversion apparatus according to the fifth embodiment.

[Fig. 18] It shows a diagram illustrating an example of a definition file that describes a method of extracting information from a moving picture.

Explanation of Reference Numerals

| 100 | data conversion apparatus |
| 101 | mobile phone with camera |
| 102 | image |
| 103 | definition file |
| 104 | information |
| 105 | server apparatus |
| 106 | mobile phone |
| 107 | image file |
| 201 | definition storing section |
| 202 | analysis definition acquiring section |
| 203 | code definition acquiring section |
| 204 | photographing section |
| 205 | data acquiring section |
| 206 | data adjusting section |
| 207 | data analyzing section |
| 208 | data converting section |
| 209 | output section |
| 210 | definition receiving section |
| 211 | data receiving section |
| 212 | definition selecting section |
| 213 | data storing section |
| 214 | data selecting section |
| 301 | definition information transmitting section |
| 302 | definition information storing section |
| 901 | CRT display |
| 902 | K/B |
| 903 | mouse |
| 904 | FDD |
| 905 | CDD |
| 906 | printer |
| 907 | scanner |
| 910 | system unit |
| 911 | CPU |
| 912 | bus |
| 913 | ROM |
| 914 | RAM |
| 915 | communication board |
| 920 | hard disk drive |
| 921 | OS |
| 922 | window system |
| 923 | program group |
| 924 | file group |
| 940 | The Internet |
| 941 | gateway |
| 942 | LAN |

**Claims**

1. A data conversion apparatus comprising:

an analysis definition acquiring section that acquires analysis definition information that, for an analysis of data, defines an analysis range of the data subject to the analysis and an analysis method to be used for the analysis;
a code definition acquiring section that acquires code definition information that defines an encoding method to be used for encoding a result of the analysis;
a data acquiring section that acquires first data;
a data analyzing section that analyzes a portion of the first data acquired by the data acquiring section by using the analysis method that is defined in the analysis definition information acquired by the analysis definition acquiring section, the portion being indicated by the analysis range that is defined in the analysis definition information acquired by the analysis definition acquiring section; and
a data converting section that encodes a result of the data analyzing section analyzing the portion of the first data by using the encoding method that is defined in the code definition information acquired by the code definition acquiring section, thereby converting the result to second data.

2. The data conversion apparatus according to claim 1, wherein the data acquiring section acquires an image as the first data.

3. The data conversion apparatus according to claim 2, wherein the analysis definition information defines coordinates where multiple points lie as the analysis range, and
wherein the data analyzing section analyzes the multiple points in the image acquired by the data acquiring section by using the analysis method that is defined in the analysis definition information acquired by the analysis definition acquiring section, the multiple points being indicated by the coordinates that are defined in the analysis definition information.

**4.** The data conversion apparatus according to claim 2, wherein the data acquiring section acquires a moving picture as the image.

**5.** The data conversion apparatus according to claim 4, wherein the analysis definition information defines coordinates where multiple points lie and multiple time points as the analysis range, and
wherein the data analyzing section analyzes the multiple points at the multiple time points in the moving picture acquired by the data acquiring section by using the analysis method that is defined in the analysis definition information acquired by the analysis definition acquiring section, the multiple points being indicated by the coordinates and the multiple time points being defined in the analysis definition information.

**6.** The data conversion apparatus according to claim 3, wherein the analysis definition information defines a method of measuring luminance as the analysis method, and
wherein the data analyzing section measures the luminance of the multiple points in the image acquired by the data acquiring section, the multiple points being indicated by the coordinates that are defined in the analysis definition information.

**7.** The data conversion apparatus according to claim 3, wherein the analysis definition information defines a method of measuring color as the analysis method, and
wherein the data analyzing section measures the color of the multiple points in the image acquired by the data acquiring section, the multiple points being indicated by the coordinates that are defined in the analysis definition information.

**8.** The data conversion apparatus according to claim 7, wherein the analysis definition information defines a method of measuring at least one of an R (Red) component, a G (Green) component, and a B (Blue) component of RGB (Red-Green-Blue) components as the color, and
wherein the data analyzing section measures the at least one of the R component, the G component, and the B component of the multiple points in the image acquired by the data acquiring section, the multiple points being indicated by the coordinates that are defined in the analysis definition information.

**9.** The data conversion apparatus according to claim 1, wherein the data acquiring section acquires an audio as the first data.

**10.** The data conversion apparatus according to claim 9, wherein the analysis definition information defines multiple time points as the analysis range, and
wherein the data analyzing section analyzes the multiple time points in the audio acquired by the data acquiring section by using the analysis method that is defined in the analysis definition information acquired by the analysis definition acquiring section, the multiple time points being defined in the analysis definition information.

**11.** The data conversion apparatus according to claim 10, wherein the analysis definition information defines a method of measuring frequency as the analysis method, and
wherein the data analyzing section measures the frequency at the multiple time points in the audio acquired by the data acquiring section, the multiple time points being defined in the analysis definition information.

**12.** The data conversion apparatus according to claim 2 further comprising:

a photographing section that photographs the image,

wherein the data acquiring section acquires the image photographed by the photographing section.

**13.** The data conversion apparatus according to claim 1 further comprising:

a definition storing section that stores the analysis definition information,

wherein the analysis definition acquiring section acquires the analysis definition information stored in the definition storing section.

**14.** The data conversion apparatus according to claim 1 further comprising:

a definition storing section that stores the code definition information,

wherein the code definition acquiring section acquires the code definition information stored in the definition storing section.

**15.** The data conversion apparatus according to claim 1 further comprising:

a definition receiving section that receives the analysis definition information,

wherein the analysis definition acquiring section acquires the analysis definition information received by the definition receiving section.

**16.** The data conversion apparatus according to claim 1 further comprising:

a definition receiving section that receives the code definition information,

wherein the code definition acquiring section acquires the code definition information received by the definition receiving section.

17. The data conversion apparatus according to claim 1 further comprising:

a definition selecting section that selects the analysis definition information,

wherein the analysis definition acquiring section acquires the analysis definition information selected by the definition selecting section.

18. The data conversion apparatus according to claim 1 further comprising:

a definition selecting section that selects the code definition information,

wherein the code definition acquiring section acquires the code definition information selected by the definition selecting section.

19. The data conversion apparatus according to claim 1 further comprising:

an output section that outputs the second data converted by the data converting section.

20. The data conversion apparatus according to claim 1 further comprising:

a data storing section that stores the first data,

wherein the data acquiring section acquires the first data stored in the data storing section.

21. The data conversion apparatus according to claim 1 further comprising:

a data receiving section that receives the first data,

wherein the data acquiring section acquires the first data received by the data receiving section.

22. The data conversion apparatus according to claim 1 further comprising:

a data selecting section that selects the first data,

wherein the data acquiring section acquires the first data selected by the data selecting section.

23. The data conversion apparatus according to claim 1 further comprising:

a data adjusting section that, for the analysis of the first data, adjusts the first data acquired by the data acquiring section,

wherein the data analyzing section analyses the first data adjusted by the data adjusting section.

24. A data conversion method comprising:

acquiring analysis definition information that, for an analysis of data, defines an analysis range of the data subject to the analysis and an analysis method to be used for the analysis;
acquiring code definition information that defines an encoding method to be used for encoding a result of the analysis;
acquiring first data;
analyzing a portion of the first data by using the analysis method that is defined in the analysis definition information, the portion being indicated by the analysis range that is defined in the analysis definition information; and
encoding a result of the analyzing the portion of the first data by using the encoding method that is defined in the code definition information, thereby converting the result to second data.

25. A data conversion system that includes a server apparatus that transmits information and a data conversion apparatus that converts first data to second data,
wherein the server apparatus includes:

a definition information storing section that stores analysis definition information that, for an analysis of data, defines an analysis range of the data subject to the analysis and an analysis method to be used for the analysis, and code definition information that defines an encoding method to be used for encoding a result of the analysis; and
a definition information transmitting section that transmits the analysis definition information and the code definition information stored in the definition information storing section to the data conversion apparatus; and

wherein the data conversion apparatus includes:

a definition receiving section that receives the analysis definition information and the code definition information transmitted by the definition information transmitting section;

an analysis definition acquiring section that acquires the analysis definition information received by the definition receiving section;

a code definition acquiring section that acquires the code definition information received by the definition receiving section;

a data acquiring section that acquires the first data;

a data analyzing section that analyzes a portion of the first data acquired by the data acquiring section by using the analysis method that is defined in the analysis definition information acquired by the analysis definition acquiring section, the portion being indicated by the analysis range that is defined in the analysis definition information acquired by the analysis definition acquiring section; and

a data converting section that encodes a result of the data analyzing section analyzing the portion of the first data by using the encoding method that is defined in the code definition information acquired by the code definition acquiring section, thereby converting the result to the second data.

# Fig. 1

103: DEFINITION FILE

102: IMAGE

101: MOBILE PHONE WITH CAMERA
(DATA CONVERSION APPARATUS)

1010101

104: INFORMATION

105: SERVER APPARATUS

EP 1 827 005 A1

# Fig. 2

PHOTOGRAPHING SECTION — 204

DATA ACQUIRING SECTION — 205

DEFINITION STORING SECTION — 201

ANALYSIS DEFINITION ACQUIRING SECTION — 202

DATA ADJUSTING SECTION — 206

DATA ANALYZING SECTION — 207

CODE DEFINITION ACQUIRING SECTION — 203

DATA CONVERTING SECTION — 208

OUTPUT SECTION — 209

101: MOBILE PHONE WITH CAMERA
(DATA CONVERSION APPARATUS)

EP 1 827 005 A1

# Fig. 3

```
                    ┌─────────────┐
                    │    START    │
                    └─────────────┘
                           │
   ┌───────────────────────────────────────────────┐
   │   ANALYSIS DEFINITION ACQUIRING SECTION        │ ─── S301
   │   ACQUIRES ANALYSIS DEFINITION INFORMATION     │
   │   FROM DEFINITION STORING SECTION              │
   └───────────────────────────────────────────────┘
                           │
   ┌───────────────────────────────────────────────┐
   │   CODE DEFINITION ACQUIRING SECTION ACQUIRES   │ ─── S302
   │   CODE DEFINITION INFORMATION FROM DEFINITION  │
   │   STORING SECTION                              │
   └───────────────────────────────────────────────┘
                           │
   ┌───────────────────────────────────────────────┐
   │   PHOTOGRAPHING SECTION PHOTOGRAPHS IMAGE      │ ─── S303
   └───────────────────────────────────────────────┘
                           │
   ┌───────────────────────────────────────────────┐
   │   DATA ACQUIRING SECTION ACQUIRES IMAGE FROM   │ ─── S304
   │   PHOTOGRAPHING SECTION                        │
   └───────────────────────────────────────────────┘
                           │
   ┌───────────────────────────────────────────────┐
   │   DATA ADJUSTING SECTION ADJUSTS IMAGE         │ ─── S305
   └───────────────────────────────────────────────┘
                           │
   ┌───────────────────────────────────────────────┐
   │   DATA ANALYZING SECTION ANALYSES IMAGE        │ ─── S306
   │   BASED ON ANALYSIS DEFINITION INFORMATION     │
   └───────────────────────────────────────────────┘
                           │
   ┌───────────────────────────────────────────────┐
   │   DATA CONVERTING SECTION EXTRACTS             │ ─── S307
   │   INFORMATION FROM ANALYSIS RESULT OF IMAGE    │
   │   BASED ON CODE DEFINITION INFORMATION         │
   └───────────────────────────────────────────────┘
                           │
   ┌───────────────────────────────────────────────┐
   │   OUTPUT SECTION OUTPUTS INFORMATION           │ ─── S308
   └───────────────────────────────────────────────┘
                           │
                    ┌─────────────┐
                    │     END     │
                    └─────────────┘
```

# Fig. 4

## Fig. 5

```
[READ]
A = I(80,60),
B = I(70,90),
C = R(55,92),
D = G(62,140),
E = B(75,40)

[OPERATE]
If (A-B) > 0 then X(1) = 1,
 otherwise X(1) = 0.
If (C-D) > 0 then X(2) = 1,
 otherwise X(2) = 0.
If (A-E) > 0 then X(3) = 1,
 otherwise X(3) = 0.
If (E+B-C) > 0 then X(4) = 1,
 otherwise X(4) = 0.
If (2*E-A-C-D) > 0 then X(5) = 1,
 otherwise X(5) = 0.
If (f(A,C)) > 0 then X(6) = 1,
 otherwise X(6) = 0.
If (f(B,D)) > 0 then X(7) = 1,
 otherwise X(7) = 0.

f(P,Q) = P mod Q.
```

ANALYSIS DEFINITION INFORMATION

CODE DEFINITION INFORMATION

# Fig. 6

(EXAMPLE OF DEFINITION FILE)

```
If (R(b)-B(b)) > 0 then X(1) = 0, otherwise X(1) = 1.
If (R(a)-R(b)) > 0 then X(2) = 0, otherwise X(2) = 1.
If (G(c)-100) > 0 then X(3) = 0, otherwise X(3) = 1.
If (I(c)-I(b)) > 0 then X(4) = 0, otherwise X(4) = 1.
```

102a: IMAGE

102b: IMAGE

1010

0100

104a: INFORMATION

104b: INFORMATION

EP 1 827 005 A1

# Fig. 7

103: DEFINITION FILE

105: SERVER APPARATUS

1010101

104: INFORMATION

101: MOBILE PHONE WITH CAMERA
(DATA CONVERSION APPARATUS)

102: IMAGE

EP 1 827 005 A1

## Fig. 8

PHOTOGRAPHING SECTION — 204

↓

DATA ACQUIRING SECTION — 205

↓

DATA ADJUSTING SECTION — 206

↓

ANALYSIS DEFINITION ACQUIRING SECTION — 202 →

DATA ANALYZING SECTION — 207

↓

DEFINITION RECEIVING SECTION — 210 →

CODE DEFINITION ACQUIRING SECTION — 203 →

DATA CONVERTING SECTION — 208 →

OUTPUT SECTION — 209

101: MOBILE PHONE WITH CAMERA (DATA CONVERSION APPARATUS)

105: SERVER APPARATUS

DEFINITION INFORMATION TRANSMITTING SECTION — 301 ←

DEFINITION INFORMATION STORING SECTION — 302

EP 1 827 005 A1

# Fig. 9

```
┌─────────────┐
│    START    │
└─────────────┘
```

DEFINITION RECEIVING SECTION RECEIVES ANALYSIS DEFINITION INFORMATION AND CODE DEFINITION INFORMATION — S401

ANALYSIS DEFINITION ACQUIRING SECTION ACQUIRES ANALYSIS DEFINITION INFORMATION FROM DEFINITION RECEIVING SECTION — S402

CODE DEFINITION ACQUIRING SECTION ACQUIRES CODE DEFINITION INFORMATION FROM DEFINITION RECEIVING SECTION — S403

PHOTOGRAPHING SECTION PHOTOGRAPHS IMAGE — S404

DATA ACQUIRING SECTION ACQUIRES IMAGE FROM PHOTOGRAPHING SECTION — S405

DATA ADJUSTING SECTION ADJUSTS IMAGE — S406

DATA ANALYZING SECTION ANALYSES IMAGE BASED ON ANALYSIS DEFINITION INFORMATION — S407

DATA CONVERTING SECTION EXTRACTS INFORMATION FROM ANALYSIS RESULT OF IMAGE BASED ON CODE DEFINITION INFORMATION — S408

OUTPUT SECTION OUTPUTS INFORMATION — S409

```
┌─────────────┐
│     END     │
└─────────────┘
```

# Fig. 10

103: DEFINITION FILE

107: IMAGE FILE

1010101

104: INFORMATION

105: SERVER APPARATUS

106: MOBILE PHONE WITH CAMERA
(DATA CONVERSION APPARATUS)

## Fig. 11

106: MOBILE PHONE WITH CAMERA (DATA CONVERSION APPARATUS)

- 201 DEFINITION STORING SECTION
- 202 ANALYSIS DEFINITION ACQUIRING SECTION
- 203 CODE DEFINITION ACQUIRING SECTION
- 205 DATA ACQUIRING SECTION
- 207 DATA ANALYZING SECTION
- 208 DATA CONVERTING SECTION
- 209 OUTPUT SECTION
- 211 DATA RECEIVING SECTION

# Fig. 12

START

ANALYSIS DEFINITION ACQUIRING SECTION ACQUIRES ANALYSIS DEFINITION INFORMATION FROM DEFINITION STORING SECTION — S501

CODE DEFINITION ACQUIRING SECTION ACQUIRES CODE DEFINITION INFORMATION FROM DEFINITION STORING SECTION — S502

DATA RECEIVING SECTION RECEIVES IMAGE — S503

DATA ACQUIRING SECTION ACQUIRES IMAGE FROM DATA RECEIVING SECTION — S504

DATA ANALYZING SECTION ANALYSES IMAGE BASED ON ANALYSIS DEFINITION INFORMATION — S505

DATA CONVERTING SECTION EXTRACTS INFORMATION FROM ANALYSIS RESULT OF IMAGE BASED ON CODE DEFINITION INFORMATION — S506

OUTPUT SECTION OUTPUTS INFORMATION — S507

END

# Fig. 13

103: DEFINITION FILE

104: INFORMATION

`1010101`

106: MOBILE PHONE WITH CAMERA
(DATA CONVERSION APPARATUS)

107: IMAGE FILE

105: SERVER APPARATUS

# Fig. 14

106: MOBILE PHONE WITH CAMERA
(DATA CONVERSION APPARATUS)

EP 1 827 005 A1

# Fig. 15

START

DEFINITION SELECTING SECTION SELECTS ANALYSIS DEFINITION INFORMATION AND CODE DEFINITION INFORMATION — S601

ANALYSIS DEFINITION ACQUIRING SECTION ACQUIRES ANALYSIS DEFINITION INFORMATION FROM DEFINITION STORING SECTION — S602

CODE DEFINITION ACQUIRING SECTION ACQUIRES CODE DEFINITION INFORMATION FROM DEFINITION STORING SECTION — S603

DATA SELECTING SECTION SELECTS IMAGE — S604

DATA ACQUIRING SECTION AQUIRES IMAGE FROM DATA STORING SECTION — S605

DATA ANALYZING SECTION ANALYSES IMAGE BASED ON ANALYSIS DEFINITION INFORMATION — S606

DATA CONVERTING SECTION EXTRACTS INFORMATION FROM ANALYSIS RESULT OF IMAGE BASED ON CODE DEFINITION INFORMATION — S607

OUTPUT SECTION OUTPUTS INFORMATION — S608

END

# Fig. 16

901

905

906

907

940: THE INTERNET

942: LAN

941

GATEWAY

902

903

904

910: SYSTEM UNIT

100: DATA CONVERSION APPARATUS

EP 1 827 005 A1

# Fig. 17

EP 1 827 005 A1

# Fig. 18

```
[READ]
For (t=0; t=T; t++) {
  A(t) = I(80,60;t),
  B(t) = R(70,90;t),
}

[OPERATE]
If (A(0)-B(0)) > 0 then X(1) = 1,
  otherwise X(1) = 0.
If (A(1)-B(1)) > 0 then X(2) = 1,
  otherwise X(2) = 0.
If (A(2)-A(1)) > 0 then X(3) = 1,
  otherwise X(3) = 0.
```

ANALYSIS DEFINITION INFORMATION

CODE DEFINITION INFORMATION

**EP 1 827 005 A1**

<table>
<tr><td colspan="2">**INTERNATIONAL SEARCH REPORT**</td><td>International application No.<br>PCT/JP2004/018812</td></tr>
</table>

| A. CLASSIFICATION OF SUBJECT MATTER |
| Int.Cl$^7$  H04N1/387 |

According to International Patent Classification (IPC) or to both national classification and IPC

| B. FIELDS SEARCHED |
| Minimum documentation searched (classification system followed by classification symbols)<br>    Int.Cl$^7$  H04N1/387 |

Documentation searched other than minimum documentation to the extent that such documents are included in the fields searched

| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-257865 A  (Hitachi, Ltd.),<br>21 September, 2001 (21.09.01),<br>Full text; Figs. 1 to 11<br>(Family: none) | 1-25 |
| Y | JP 2004-236293 A  (Hewlett-Packard Development Co., L.P.),<br>19 August, 2004 (19.08.04),<br>Full text; Figs. 1 to 3<br>(Family: none) | 1-25 |
| Y | JP 2002-335391 A  (Sharp Corp.),<br>22 November, 2002 (22.11.02),<br>Full text; Figs. 1 to 13<br>(Family: none) | 1-25 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    15 March, 2005 (15.03.05) | Date of mailing of the international search report<br>    05 April, 2005 (05.04.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/018812 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2004-173237 A (Sanyo Electric Co., Ltd.),<br>17 June, 2004 (17.06.04),<br>Full text; Figs. 1 to 27<br>& US 2004-0101160 A | 4,5,9-11<br>1-3,6-8,<br>12-25 |
| Y<br>A | JP 2003-264683 A (Oki Electric Industry Co.,<br>Ltd.),<br>19 September, 2003 (19.09.03),<br>Full text; Figs. 1 to 14<br>(Family: none) | 4,5,9-11<br>1-3,6-8,<br>12-25 |

Form PCT/ISA/210 (continuation of second sheet) (January 2004)

**EP 1 827 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004179783 A